Europäisches Patentamt

European Patent Office

Office européen des brevets

(11) Publication number: **0 398 632**
**A2**

# EUROPEAN PATENT APPLICATION

(21) Application number: **90305203.3**

(51) Int. Cl.5: **F16J 1/02**

(22) Date of filing: **15.05.90**

(30) Priority: **16.05.89 ZA 893637**

(43) Date of publication of application:
**22.11.90 Bulletin 90/47**

(84) Designated Contracting States:
**AT BE CH DE DK ES FR GB GR IT LI LU NL SE**

(71) Applicant: **Cook, Eric Johnstone**
**57 Somerset Street**
**Ferryvale Nigel Transvaal Province(ZA)**

(72) Inventor: **Cook, Eric Johnstone**
**57 Somerset Street**
**Ferryvale Nigel Transvaal Province(ZA)**

(74) Representative: **Ayers, Martyn Lewis Stanley**
**et al**
**J.A. KEMP & CO. 14 South Square Gray's Inn**
**London, WC1R 5EU(GB)**

(54) Hydraulic piston and cylinder arrangement.

(57) An hydraulic piston and cylinder arrangement comprises an annular piston reciprocable over a relatively short stroke within an annular cylinder, the piston having concavely curved inner and outer surfaces to align the piston with the cylinder when reciprocating.

F I G. 1

EP 0 398 632 A2

## INTRODUCTION

**THIS INVENTION** relates to an hydraulic piston and cylinder arrangement.

## BACKGROUND TO THE INVENTION

Many hydraulic piston and cylinder arrangements are known, but particularly the use of annular piston and cylinders gives rise to difficulties where the piston stroke is short. In these cases, the piston must be carefully aligned with the cylinder and held in an aligned position, otherwise the piston, when removed from the blind cylinder end can become misaligned, and jam.

## OBJECT OF THE INVENTION

It is an object of this invention to provide an hydraulic piston and cylinder arrangement which can at least alleviate this difficulty.

## SUMMARY OF THE INVENTION

In accordance with this invention there is provided an hydraulic piston and cylinder arrangement comprising an annular piston reciprocable in a co-operating annular cylinder between an open and a blind cylinder end, the piston walls being concavely curved in a manner allowing the piston to guide itself into alignment for reciprocation from a non-aligned position removed from the blind cylinder end.

The invention further provides for the full length of the exterior annular piston wall to be curved in cross-section, and preferably arcuately curved. Also, there is provided for the inner annular wall to be arcuately curved. A piston ring is preferably provided around the outer piston wall towards the head and thereof to act as a bearing pad.

## BRIEF DESCRIPTION OF THE DRAWINGS

A preferred embodiment of the invention is described below by way of example only, and with reference to the accompanying drawings, in which:

Figure 1 is a cross-sectional view of a portion of an annular cylinder and piston; and

Figure 2 is a cross-sectional view showing the full diametrical dimensions of the embodiment of Figure 1.

## DETAILED DESCRIPTION OF THE DRAWINGS

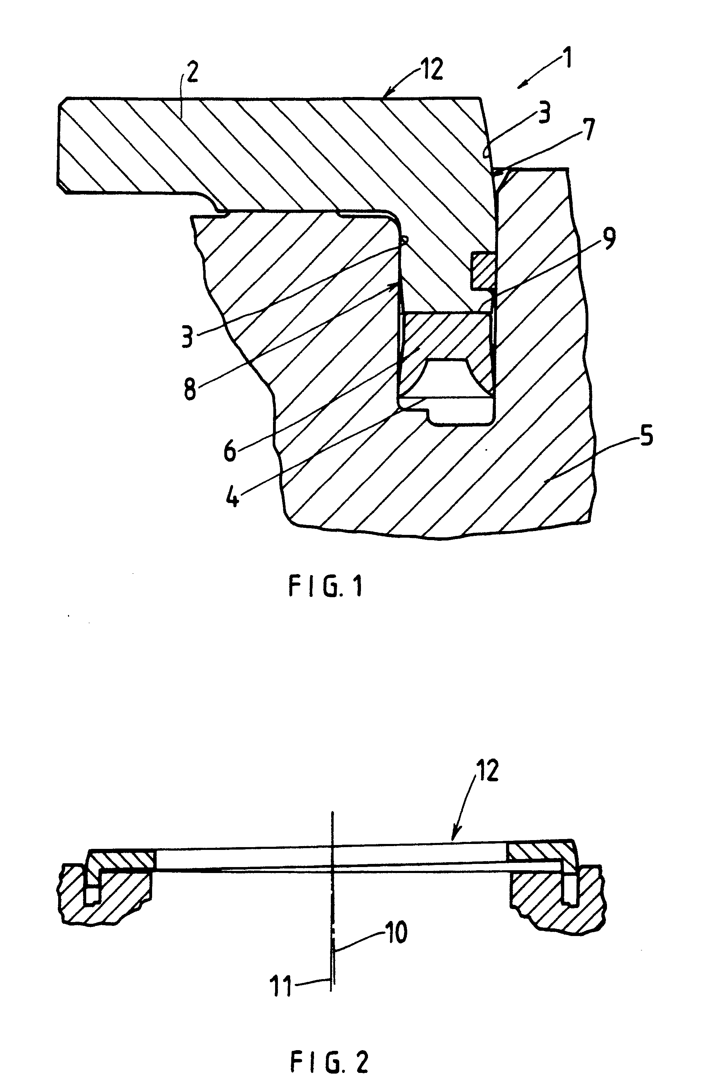

Referring to Figure 1, a piston and cylinder arrangement (1) comprises an annular piston (2), having annular piston walls (3), which are reciprocable in an annular cylinder (4) within a cylinder base (5). A seal (6) is provided at the annular end of the piston to seal against the cylinder walls, and extends in annular manner around the piston and cylinder.

The exterior wall (7) of the piston is arcuately curved in a convex manner. A piston ring is provided in the exterior of the piston wall, at the center of the radius perpendicular to the centre line of the piston, to act as a bearing pad and prevent metal to metal contact with the cylinder and resultant scoring of the surfaces.

In use, the piston is free to misalign during its stroke without detrimental effect to its location and movement within the cylinder. The geometry allows maximum misalignment within the restriction of the member the piston acts upon, which member also determines the final alignment of the piston through its contact with face 12 of the piston (see Figures 1 and 2). This application is limited to pistons having a short stroke relative to its diameter.

It will be appreciated that since the piston walls are to be machined in any event, the provision of an arcuate cross-sectional shape requires little extra machining.

It is considered that the invention provides a simple and effective piston and cylinder arrangement which can self align to a useful extent and when the maximum misalignment and stroke is controlled by other components within the mechanism.

## Claims

1. An hydraulic piston and cylinder arrangement comprising an annular piston reciprocable in a co-operating annular cylinder between an open and a blind cylinder end, the piston walls being concavely curved in a manner allowing the piston to guide itself into alignment for reciprocation from a non-aligned position removed from the blind cylinder end.

2. An hydraulic piston and cylinder arrangement as claimed in claim 1 in which the full length of the exterior annular piston wall is curved in cross-section.

3. An hydraulic piston and cylinder arrangement as claimed in claim 2 in which the said piston wall is arcuately curved.

4. An hydraulic piston and cylinder arrangement as claimed in claim 2 or claim 3 in which the inner annular wall of the piston is arcuately curved.

5. An hydraulic piston and cylinder arrangement as claimed in claim 4 in which the said inner piston wall is arcuately curved.

6. An hydraulic piston and cylinder arrangement as claimed in any one of the preceding claims in which a piston ring is provided around the outer piston wall towards the head end thereof to act as a bearing pad.

FIG. 1

FIG. 2